# DEMANDE DE BREVET EUROPEEN

(11) **EP 2 108 855 A1**
(43) Date de publication de la demande: **14.10.2009**
(21) Numéro de dépôt: 09157414.5
(22) Date de dépôt: 06.04.2009
(51) Int. Cl.: F16D 13/52, F16D 13/74, F16D 13/72, F16H 57/04, F16H 63/30

(54) **Boîte de vitesses pour véhicule**

(30) Priorité: 10.04.2008 FR 0852395
(71) Demandeur: Peugeot Citroën Automobiles SA, 78140 Vélizy Villacoublay (FR)
(72) Inventeur: Mitchell, Clément, 92250 La Garenne Colombes (FR)

(57) **Abrégé**

Boîte de vitesses qui comporte des engrenages déterminant des rapports de démultiplication et comportant au moins un pignon (20) monté fou à rotation sur un arbre (22), au moins un coulisseau (24) qui est solidaire en rotation avec l'arbre (22) et qui est monté mobile à translation par rapport à l'arbre alternativement dans une position sollicitée et dans une position découplée, et au moins un dispositif de friction (26, 28) interposé entre le coulisseau (24) et le pignon (20). La boîte comporte un système de lubrification du dispositif de friction (26, 28) comprenant au moins un obturateur (44) coulissant par rapport à l'arbre (22) avec le coulisseau (24) pour assurer le passage du lubrifiant (27) vers ledit dispositif (26, 28) à la position découplée du manchon (24) et obturer le passage du lubrifiant vers ledit dispositif à la position sollicitée du manchon. Véhicule comportant une telle boîte de vitesses.

## Description

La présente invention est relative aux boîtes de vitesses pour véhicule.

Plus particulièrement, l'invention concerne une telle boîte de vitesses qui comporte :
- des engrenages déterminant des rapports de démultiplication de marche avant et comportant au moins un pignon monté fou à rotation sur un arbre,
- au moins un coulisseau qui est solidaire en rotation avec l'arbre et qui est monté mobile à translation par rapport à l'arbre alternativement dans une position sollicitée en faisant coopérer à rotation le pignon et l'arbre et dans une position découplée libre à rotation par rapport au pignon,
- au moins un dispositif de friction interposé entre le coulisseau et le pignon permettant au moins de rapprocher les vitesses de rotation du pignon et du manchon lors du passage du coulisseau de sa position découplée à sa position sollicitée.

Ce type de boîte de vitesses est par exemple utilisé comme boîte automatique dans laquelle les engrenages sont des trains épicycloïdaux. Dans ces boîtes automatiques, les dispositifs de friction font partie d'un embrayage multidisques dans un système de commande de changement de vitesses. L'embrayage, associé à au moins un engrenage, permet d'assurer la transmission de couple lors d'un changement de rapport. La lubrification de la boîte est en général assurée par un circuit de lubrification forcée grâce à l'utilisation d'une ou plusieurs pompes à huile. Lorsque un embrayage est sollicité, l'huile se trouvant entre les disques entrant en contact selon leurs faces latérales doit d'abord être essorée, c'est-à-dire évacuée avant transmission du couple. L'huile est déviée vers l'extérieur par effet centrifuge pendant que le couple est transmis. Au désengagement du système, lorsque la pression exercée est annulée, l'huile passe à nouveau entre les disques pour assurer la dissipation de l'énergie générée par frottement. L'huile peut manquer lors de l'écartement des disques, au détriment de leur refroidissement.

Ce type de boîte de vitesses est aussi par exemple utilisé comme boîte manuelle pilotée dans laquelle les engrenages sont des pignons reliés à des arbres primaires et secondaires parallèles et dans laquelle la fonction principale des organes de friction est, dans un synchroniseur, de synchroniser le coulisseau, qui est formé par un manchon, et le pignon évoluant à des vitesses de rotation différentes lors d'une opération de changement de rapport. Sauf dans quelques cas particuliers de pilotage, il n'y a pas de transmission de couple du moteur vers les roues motrices du véhicule pendant cette opération puisque l'embrayage est à l'état ouvert, ce qui réduit l'échauffement des organes de friction. Outre le barbotage et des projections de lubrifiant, il y a toutefois en général des orifices de lubrification radialement dans l'arbre pour lubrifier la portée du pignon fou afin d'éviter le risque de grippage des engrenages qui peuvent chauffer à cause de la différence de régime de rotation et d'autres orifices de lubrification radialement inclinés dans la masse du pignon afin de lubrifier les dents de crabotage du synchroniseur qui entrent en contact avec celles du manchon dans l'opération de verrouillage constituant la dernière phase du processus de synchronisation. Dans les cas particuliers de pilotage de changement de rapport avec transmission de couple, compte tenu de l'absence de lubrification spécifique des organes de friction ainsi que du niveau de sollicitations exercé sur les surfaces de friction, ces derniers peuvent s'échauffer et s'user prématurément.

La présente invention a notamment pour but d'améliorer les boîtes telles que ci-dessus.

A cet effet, selon l'invention, une boîte de vitesses pour véhicule comporte :
- des engrenages déterminant des rapports de démultiplication de marche avant et comportant au moins un pignon monté fou à rotation sur un arbre,
- au moins un coulisseau qui est solidaire en rotation avec l'arbre et qui est monté mobile à translation par rapport à l'arbre alternativement dans une position sollicitée en faisant coopérer à rotation le pignon et l'arbre et dans une position découplée libre à rotation par rapport au pignon,
- au moins un dispositif de friction interposé entre le coulisseau et le pignon permettant de transmettre du couple entre le pignon et le manchon lors du passage du coulisseau de sa position découplée à sa position sollicitée, et
- un système de lubrification du dispositif de friction comprenant au moins un obturateur pouvant coulisser par rapport à l'arbre avec le coulisseau pour assurer le passage du lubrifiant vers le dispositif de friction à la position découplée du coulisseau et obturer le passage du lubrifiant vers le dispositif de friction à la position sollicitée du manchon.

Dans divers modes de réalisation de la boîte de vitesses selon l'invention, on peut éventuellement avoir recours en outre à l'une et/ou à l'autre des dispositions suivante :
- l'obturateur peut coulisser par rapport à l'arbre avec le coulisseau pour obturer le passage du lubrifiant vers le dispositif de friction lors du passage du coulisseau de sa position découplée à sa position sollicitée ;
- le système de lubrification comporte un réservoir de lubrifiant qui est défini entre l'arbre et l'obturateur, qui est rempli de lubrifiant à la position sollicitée du coulisseau et qui est traversé par le lubrifiant à la position découplée du coulisseau ;
- le réservoir défini entre l'obturateur et l'arbre est sensiblement cylindrique et en ce que l'arbre comprend une portion tubulaire définissant intérieurement un canal axial d'alimentation en lubrifiant débouchant vers le réservoir au travers d'au moins un perçage radial réalisé dans la paroi latérale de la portion tubulaire.

Selon d'autres caractéristiques avantageuses que la boîte de vitesses peut avoir :
- le système de lubrification comporte un embout tubulaire solidaire du pignon concentriquement à l'arbre, portant des organes de friction du dispositif de friction et comportant au moins un perçage radial de passage de lubrifiant débouchant vers les organes de friction,
- l'obturateur définit un fourreau s'étendant concentriquement à l'arbre, entre l'embout tubulaire et l'arbre, et comportant au moins un perçage radial de passage de lubrifiant à partir du réservoir, et
- les perçages radiaux de l'embout, du fourreau de l'obturateur et de l'arbre peuvent d'une part communiquer les uns relativement aux autres pour assurer le passage du lubrifiant à la position découplée du coulisseau et sont d'autre part axialement décalés les uns relativement aux autres pour obturer le passage du lubrifiant à la position sollicitée du coulisseau.

Selon d'autres caractéristiques avantageuses que la boîte de vitesses peut avoir :
- les organes de friction comportent au moins un premier organe solidaire en rotation du coulisseau et au moins un second organe solidaire en rotation du pignon;
- les organes de friction sont des disques coaxiaux à l'arbre et l'obturateur facilite d'une part l'essorage du lubrifiant et le frottement des disques à la position sollicitée du coulisseau, ce qui permet aux disques de friction de fonctionner rapidement de manière optimale lorsque le système est sollicité;
- les organes de friction sont des bagues coniques coaxiales à l'arbre dans un synchroniseur par friction et l'obturateur facilite d'une part l'essorage du lubrifiant et le frottement des bagues à la position sollicitée du coulisseau, ce qui permet donc aux bagues de friction de fonctionner rapidement de manière optimale lorsque le système est sollicité.

Par ailleurs, l'invention a également pour objet un véhicule automobile comportant un moteur, des roues motrices et une boîte de vitesses conforme à l'invention, dans laquelle des changements de rapport de démultiplication sont effectués avec possibilité de transmission de couple entre le moteur et les roues motrices.

Selon d'autres caractéristiques avantageuses que le véhicule peut avoir :
- la boîte de vitesses est une boîte automatique dans laquelle les engrenages font partie de trains épicycloïdaux ;
- la boîte de vitesses est une boîte manuelle pilotée dans laquelle les engrenages sont des pignons reliés à des arbres primaires et secondaires parallèles.

D'autres buts, caractéristiques et avantages de l'invention apparaîtront au cours de la description suivante de plusieurs modes de réalisation, donnés à titre d'exemples non limitatifs, en regard des dessins joints.

Sur les dessins :
- la figure 1 est une section schématique d'une partie de boîte de vitesses selon l'invention à la position découplée du manchon ;
- la figure 2 est une section schématique d'une partie de boîte de vitesses selon l'invention lors du passage du manchon de sa position découplée à sa position sollicitée ;
- la figure 3 est une section schématique d'une partie de boîte de vitesses selon l'invention à la position sollicitée du manchon ;
- la figure 4 est une vue correspondant à la figure 2 pour une variante de réalisation de boîte de vitesses selon l'invention.

Sur les différentes figures, les mêmes références désignent des éléments identiques ou similaires.

Dans un véhicule traditionnel, un groupe moto propulseur comprend un moteur présentant un arbre de sortie et une boîte de vitesses dont une ou plusieurs sorties entraînent des roues motrices du véhicule.

La boîte de vitesse peut être manuelle avec des engrenages montés relativement à des arbres primaire et secondaire parallèles, peut être également de type manuelle mais dite pilotée car ayant une commande automatisée des changements de rapport ou peut être automatique en ayant des engrenages qui font partie de trains épicycloïdaux.

Quel que soit le type de boîte de vitesse tel que ci-dessus, les engrenages engrenés à rotation déterminent au moins par paire de pignons au moins des rapports de démultiplication de marche avant.

Dans le mode de réalisation représenté, les engrenages comportent au moins un premier pignon 20 qui est monté fou à rotation sur un arbre 22 de la boîte et qui est engrené à rotation avec un deuxième pignon solidaire d'un autre arbre de la boîte.

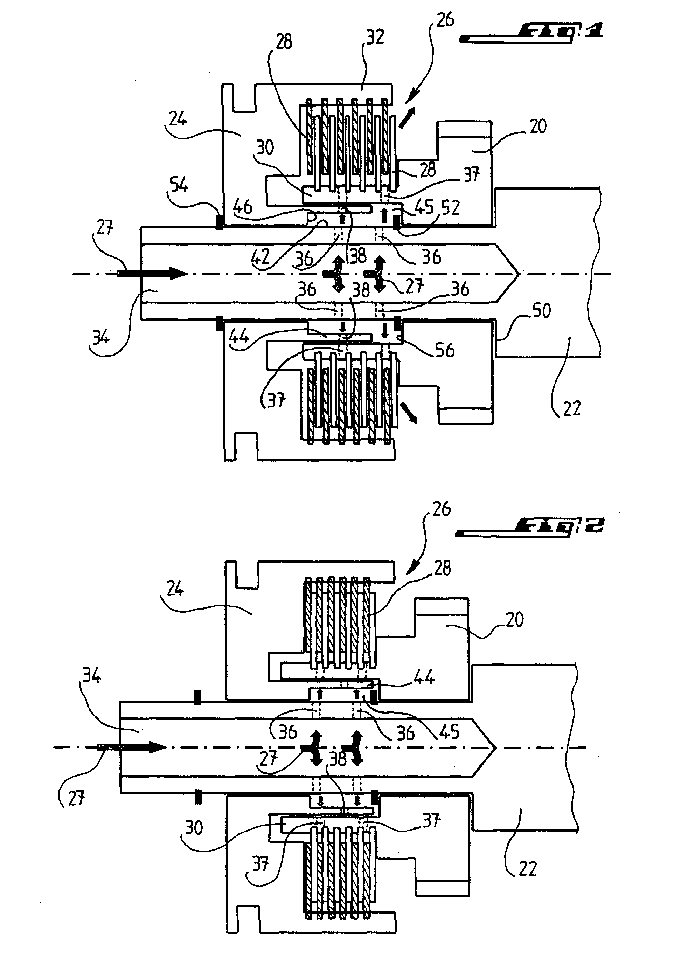

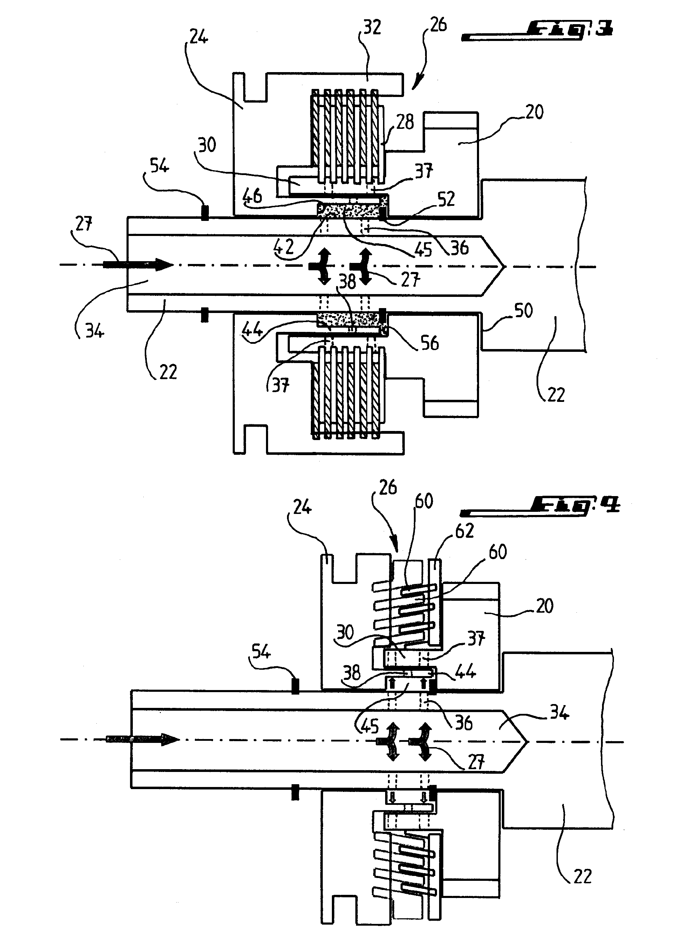

Au moins un coulisseau, ici sous forme de manchon 24, est solidaire en rotation avec l'arbre 22 du premier pignon 20. Le coulisseau formant manchon 24 est soit en position sollicitée (figure 3) en faisant coopérer à rotation le pignon et l'arbre, soit en position découplée (figure 1) libre à rotation par rapport au pignon 20. Au moins un dispositif de friction 26 est interposé entre le manchon 24 et le pignon 20 de manière à transmettre du couple par glissement et/ou à ajuster les vitesses de rotation du pignon et du manchon lors du passage du manchon de sa position découplée à sa position sollicitée lors des changements de rapport de vitesse. Le dispositif de friction est par exemple un synchroniseur à au moins une surface de friction dans le cas d'une boîte type manuelle et/ou manuelle pilotée ou un embrayage multidisques dans le cas d'une boîte type automatique.

Lors des changements de rapport de vitesses, le moteur et la boîte de vitesses sont généralement découplés par l'intermédiaire d'un embrayage dans le cas d'une boîte type manuelle pilotée ou manuelle non pilotée et par l'intermédiaire d'un convertisseur hydraulique de couple dans le cas des boîtes automatiques. Dans certains cas d'utilisation des boîtes de vitesses, les changements de rapport sont effectués sous couple, en particulier dans les boîtes de vitesses automatiques ou manuelles pilotées. Dans ce cas, le dispositif de friction 26 est soumis à des efforts lors des changements de rapport de vitesse, ce qui entraîne une production de chaleur.

Selon l'invention, qui s'applique au moins aux trois types de boîte de vitesses ci-dessus, un système de lubrification dédié au dispositif de friction 26 permet un bon fonctionnement de ce dernier. Le lubrifiant 27, symbolisé par des flèches sur les figures, permet en particulier d'évacuer la chaleur, comme il sera expliqué plus en détail ultérieurement.

Dans le mode de réalisation illustré aux figures 1 à 3, le dispositif de friction 26 comporte des organes de friction constitués par des disques 28 coaxiaux à l'arbre 22. Une première série de disques 28 est liée intérieurement par des cannelures axiales aménagées dans un embout tubulaire 30 qui est une partie en porte-à-faux du pignon fou 20. Une deuxième série de disques 28 est liée extérieurement par des cannelures axiales aménagées dans une partie tubulaire 32 à la périphérie du manchon 24. L'embout 30 et la partie 32 sont coaxiales à l'arbre 22.

Le système de lubrification du dispositif de friction 26 est constitué dans les pièces supportant les disques 28, à savoir le manchon 24 et le pignon fou 20.

Le système de lubrification comporte un canal axial 34 d'alimentation en lubrifiant ménagé à l'intérieur de l'arbre 22 portant fou le premier pignon 20. L'arbre 22 délimite aussi deux séries de perçages 36 de passage de lubrifiant axialement décalées et s'étendant radialement à partir du canal axial 34.

L'embout tubulaire 30 solidaire du pignon 20 et portant la première série de disques 28 comporte un passage de lubrifiant débouchant vers les disques 28, en l'espèce deux séries de perçages 37 s'étendent radialement.

Un fourreau 44, qui fait partie du manchon 24 et est coaxial à l'arbre 22, s'étend en porte-à-faux du manchon 24 en étant coaxial avec la partie périphérique 32.

Le fourreau 44 comporte un passage de lubrifiant, en l'espèce une série de perçages 38 s'étendant radialement vers l'embout 30.

Chaque série de perçage 37, 38, 36 respectivement de l'embout 30, du fourreau 44 et de l'arbre 22 comprend par exemple huit perçages angulairement répartis de façon régulière.

Le système de lubrification comporte un réservoir 45 de lubrifiant, alimenté par les perçages 36 de l'arbre 22. Le réservoir 40 est sensiblement cylindrique, en étant délimité par l'arbre 22, par le fourreau 44 et par le pignon 20. A ses extrémités axiales, le réservoir 40 est délimité par un épaulement 46 du manchon à la racine du fourreau 44 et par l'embout 30 à son raccordement avec le reste du pignon 20.

Les pièces supportant les organes de friction sont montées de la manière suivante. Le pignon 20 est monté fou à rotation sur l'arbre 22 en étant maintenu axialement fixe entre un épaulement 50 de l'arbre 22 et un anneau élastique d'arrêt 52. Les séries de perçages 37 de l'embout tubulaire 30 et les séries de perçages 36 de l'arbre 22 sont selon des mêmes plans transversaux à l'arbre. Le manchon 24 est monté angulairement fixe sur l'arbre 22 et axialement mobile sur l'arbre 22 de manière que la surface externe de son fourreau 44 soit en contact glissant avec la surface interne de l'embout 30.

En position découplée du manchon 24 (figure 1), c'est-à-dire quand le manchon est en butée axiale sur un anneau élastique d'arrêt 54 de sorte que les disques 28 soient distants pour que le pignon 20 et le manchon 24 soient libres à rotation, l'extrémité libre du fourreau 44 est suffisamment distante d'un épaulement 56 du pignon 20 situé à la racine de l'embout 30 pour ne pas obturer la série de perçages 37 la plus proche dudit épaulement 56. Les séries de perçages 37, 38, 36 respectivement de l'embout 30, du fourreau 44 et de l'arbre 22 sont coplanaires et, en fonction de leur positionnement angulaire, communiquent les uns relativement aux autres pour assurer le passage de lubrifiant à la position découplée du manchon.

Lors du passage du manchon de sa position découplée à sa position sollicitée (figure 2), ce dernier est déplacé axialement vers le pignon 20 en alignant des parties pleines de la partie tubulaire du manchon 24 avec les perçages 37 du pignon. De ce fait, le fourreau 44 du manchon 24 obture le passage de lubrifiant du réservoir 45 vers les organes de friction 26 qui du fait de leur rotation associée aux zones de contact sont essorés. Le fourreau 44 forme alors un obturateur du passage de lubrifiant 27.

A la position sollicitée du manchon 24 (figure 3), les disques 28 sont en contact et jouent le rôle d'un embrayage sollicité pour transmettre un couple en faisant coopérer à rotation le pignon et le manchon. Le fourreau 44 du manchon 24 obture toujours le passage de lubrifiant du réservoir vers les organes de friction et le lubrifiant 27 rempli le réservoir 45.

Lors du passage du manchon 24 de sa position sollicitée à sa position découplée, le manchon est éloigné du pignon 20 pour écarter les disques 28 et le passage de lubrifiant du canal 34 de l'arbre 22 vers les organes de friction 26 via le réservoir 45 est libéré. Avantageusement, le lubrifiant 27 alimenté sous l'action de la force centrifuge passe entre les disques et permet leur refroidissement, ce qui garantit le bon fonctionnement du système de friction même si ce dernier est sollicité de manière répétée dans un court laps de temps.

Avantageusement, le lubrifiant 27 est amené vers les organes de friction 26 par jet direct sur ces derniers sous l'effet de la force centrifuge, sans consommation d'énergie liée à l'utilisation d'une pompe à huile.

En variante de réalisation représentée à la figure 4, à la place des disques servant d'embrayage associé à des engrenages dans une boîte de vitesse automatique ou manuelle pilotée, les organes de friction 26 sont des bagues coniques 60 d'un synchroniseur de boîte de vitesses de type manuelle, mais par exemple pilotée pour un changement automatisé des rapports sans rupture de couple.

Une première série de quatre bagues coniques 60 est liée en rotation au manchon 24 par l'intermédiaire de pattes métalliques (souvent dénommées « tocs ») dont la configuration du fourreau 44 correspond à la configuration du fourreau 44 décrit en relation avec les figures 1 à 3. Une deuxième série de trois bagues coniques 60 est, par l'intermédiaire de pattes métalliques 62 (souvent dénommées « tocs »), fixée au pignon 20 dont la configuration de l'embout 30 correspond à la configuration de l'embout 30 du pignon 20 décrit en relation avec les figures 1 à 3.

Le fonctionnement est le même que celui décrit précédemment concernant le rôle d'obturateur du fourreau 44. Ici, les bagues coniques 60 transmettent du couple par frottement lorsque le manchon 24 coulisse, c'est-à-dire est sollicité, quand il n'est pas à sa position découplée. Les bagues coniques chauffent lors de changements rapides de rapports avec transmission de couple. Le lubrifiant amené par jet direct sur les organes de friction permet avantageusement un refroidissement des bagues.

Le refroidissement apporté par le lubrifiant est particulièrement avantageux dans le cadre d'un pilotage de boîte de vitesses de type manuelle dans lequel les changements de rapport sont effectués sans ouverture totale de l'embrayage interposé entre la boîte de vitesses et le moteur.

Dans une variante de réalisation non représentée du mode de réalisation des figures 1 à 3, un moyeu est interposé entre l'arbre et la série de disques solidaire à rotation dudit arbre. Le manchon a toujours pour fonction principale de translater lesdits disques, ici sur leur moyeu, pour appliquer un effort axial de serrage des disques.

Dans un mode de réalisation non représenté de l'invention, le coulisseau est monté sur un arbre primaire de boîte de vitesses de type manuelle sur lequel est monté le pignon fou de sixième et dernier rapport. Dans ce mode de réalisation, le coulisseau est actionné sous la commande de moyens de pilotage automatique de la boîte pour solliciter le dispositif de friction lors de changement de rapport avec transmission de couple alors que l'embrayage placé entre le moteur et l'arbre primaire est fermé ou glissant. La boîte comporte un système de crabotage sans synchroniseur associé à chaque pignon fou. Le système de crabotage est désaccouplé alors que le couple transmis initialement aux engrenages est dérivé vers le dispositif de friction qui est activé et sollicité à frottements lors de tous les changements de rapport. De plus, le dispositif de friction sert de synchronisation pour les changements de rapport montants. Il freine à un régime cible l'arbre primaire lors des changements de rapport montants pour désaccoupler le système de crabotage du rapport à enlever et pour ajuster la vitesse des crabots du système de crabotage du rapport à engager avec celle du pignon dudit rapport. Pour les changements de rapport descendants, le dispositif de friction est activé pour désaccoupler le système de crabotage du rapport à enlever, l'ajustement de la vitesse des crabots du système de crabotage du rapport à engager étant faîte par accélération du moteur à un régime cible. Compte tenu du fonctionnement ci-dessus, le dispositif de friction doit frotter en transmettant un couple important pour permettre de désaccoupler le système de crabotage par dérivation de couple sans qu'il n'y ait de rupture de transmission de couple entre le moteur et les roues motrices, ce qui entraîne son échauffement. L'invention permet le refroidissement du dispositif de friction par lubrification alors que les organes de friction sont découplés à la position découplée du coulisseau.

## Revendications

1. Boîte de vitesses pour véhicule qui comporte .
- des engrenages déterminant des rapports de démultiplication de marche avant et comportant au moins un pignon (20) monté fou à rotation sur un arbre (22),
- au moins un coulisseau (24) qui est solidaire en rotation avec l'arbre (22) et qui est monté mobile à translation par rapport à l'arbre alternativement dans une position sollicitée en faisant coopérer à rotation le pignon (20) et l'arbre (22) et dans une position découplée libre à rotation par rapport au pignon, et
- au moins un dispositif de friction (26, 28, 60) interposé entre le coulisseau (24) et le pignon (20) permettant au moins de transmettre un couple entre le pignon et le manchon lors du passage du coulisseau de sa position découplée à sa position sollicitée,
**caractérisée en ce qu'**elle comporte un système de lubrification du dispositif de friction (26, 28, 60) comprenant au moins un obturateur (44) pouvant coulisser par rapport à l'arbre (22) avec le coulisseau (24) pour assurer le passage du lubrifiant (27) vers le dispositif de friction (26, 28, 60) à la position découplée du coulisseau (24) et obturer le passage du lubrifiant (27) vers le dispositif de friction (26, 28, 60) à la position sollicitée du manchon (24).

2. Boîte de vitesses selon la revendication précédente, **caractérisée en ce que** l'obturateur (44) peut coulisser par rapport à l'arbre (22) avec le coulisseau (24) pour obturer le passage du lubrifiant (27) vers le dispositif de friction (26, 28, 60) lors du passage du coulisseau (24) de sa position découplée à sa position sollicitée.

3. Boîte de vitesses selon l'une quelconque des revendications précédentes, **caractérisée en ce que** le système de lubrification comporte un réservoir (45) de lubrifiant qui est défini entre l'arbre (22) et l'obturateur (44), qui est rempli de lubrifiant (27) à la position sollicitée du coulisseau (24) et qui est traversé par le lubrifiant (27) à la position découplée du coulisseau (24).

4. Boîte de vitesses selon la revendication précédente, **caractérisée en ce que** le réservoir (45) défini entre l'obturateur (44) et l'arbre (22) est sensiblement cylindrique et **en ce que** l'arbre (22) comprend une portion tubulaire définissant intérieurement un canal axial (34) d'alimentation en lubrifiant débouchant vers le réservoir (45) au travers d'au moins un perçage radial (36) réalisé dans la paroi latérale de la portion tubulaire.

5. Boîte de vitesses selon la revendication 4, **caractérisée en ce que :**
- le système de lubrification comporte un embout tubulaire (30) solidaire du pignon (20) concentriquement à l'arbre (22), portant des organes de friction (28, 60) du dispositif de friction (26, 28, 60) et comportant au moins un perçage radial (37) de passage de lubrifiant débouchant vers les organes de friction (28, 60),
- l'obturateur (44) définit un fourreau (44) s'étendant concentriquement à l'arbre (22), entre l'embout tubulaire (30) et l'arbre (22), et comportant au moins un perçage radial (38) de passage de lubrifiant à partir du réservoir (45), et
- les perçages radiaux (37, 38, 36) de l'embout (30), du fourreau (44) de l'obturateur et de l'arbre (22) peuvent d'une part communiquer les uns relativement aux autres pour assurer le passage du lubrifiant (27) à la position découplée du coulisseau (24) et sont d'autre part axialement décalés les uns relativement aux autres pour obturer le passage du lubrifiant (27) à la position sollicitée du coulisseau (24).

6. Boîte de vitesses selon la revendication précédente, **caractérisée en ce que** les organes de friction (28, 60) comportent au moins un premier organe solidaire en rotation du coulisseau (24) et au moins un second organe solidaire en rotation du pignon (20).

7. Boîte de vitesses selon l'une quelconque des revendications précédentes, **caractérisée en ce que** les organes de friction sont des disques (28) coaxiaux à l'arbre (22) et **en ce que** l'obturateur (44) facilite l'essorage du lubrifiant (27) et le frottement des disques (28) à la position sollicitée du coulisseau (24).

8. Boîte de vitesses selon l'une quelconque des revendications précédentes, **caractérisée en ce que** les organes de friction sont des bagues coniques (60) coaxiales à l'arbre (22) dans un synchroniseur par friction et **en ce que** l'obturateur (44) facilite l'essorage du lubrifiant (27) et le frottement des bagues coniques (60) à la position sollicitée du coulisseau (24).

9. Véhicule automobile comportant un moteur, des roues motrices et une boîte de vitesses dans laquelle des changements de rapport de démultiplication sont effectués avec possibilité de transmission de couple entre le moteur et les roues motrices, **caractérisé en ce que** la boîte de vitesses est conforme à l'une quelconque des revendications précédentes.

10. Véhicule automobile selon la revendication 9, **caractérisé en ce que** la boîte de vitesses est une boîte automatique dans laquelle les engrenages font partie de trains épicycloïdaux.

11. Véhicule automobile selon la revendication 9, **caractérisé en ce que** la boîte de vitesses est une boîte manuelle pilotée dans laquelle les engrenages sont des pignons reliés à des arbres primaires et secondaires parallèles.
